# EUROPÄISCHE PATENTANMELDUNG

(11) **EP 2 709 268 A1**
(43) Veröffentlichungstag der Anmeldung: **19.03.2014**
(21) Anmeldenummer: 13181436.0
(22) Anmeldetag: 23.08.2013
(51) Int. Cl.: H02P 29/00, H02P 23/00, B60L 15/20, B60L 15/00, B60L 15/10, H02P 23/03

(54) **Verfahren zum Betrieb eines Schienenfahrzeugs**

(30) Priorität: 18.09.2012 DE 102012216659
(71) Anmelder: Siemens Aktiengesellschaft, 80333 München (DE)
(72) Erfinder: Schraud, Joachim, 91054 Buckenhof (DE); Spaeth, Wolfgang, 91056 Erlangen (DE)

(57) **Zusammenfassung**

Die Erfindung betrifft ein Verfahren zum Betrieb eines Schienenfahrzeugs (2), das einen Elektromotor (6) und einen Traktionsumrichter (8) aufweist, der einen Eingangs-Stromrichter (10) zum Erzeugen einer Zwischenkreisgleichspannung und einen Motorumrichter (14) umfasst, bei dem ein motortemperaturkritischer Betrieb anhand zumindest eines vorbestimmten Parameters als solcher erkannt wird.

Es wird vorgeschlagen, dass bei einem Erkennen des motortemperaturkritischen Betriebs ein Motor schonender Betriebsmodus des Traktionsumrichters (8) eingeleitet wird, der eine Wärmeerzeugung im Elektromotor (6) gegenüber einem regulären Betrieb verringert und das Motormoment erhält.

## Beschreibung

Die Erfindung betrifft ein Verfahren zum Betrieb eines Schienenfahrzeugs, das mindestens einen Elektromotor und mindestens einen Traktionsumrichter aufweist, der einen Eingangs-Stromrichter zum Erzeugen einer Zwischenkreisgleichspannung und einen Motorumrichter umfasst, bei dem ein motortemperaturkritischer Betrieb anhand zumindest eines vorbestimmten Parameters als solcher erkannt wird.

Beim Betrieb von Schienenfahrzeugen kann es vorkommen, dass diese in einem Betriebsmodus gefahren werden, in dem ein Antriebsmotor des Schienenfahrzeugs mehr Wärme erzeugt, als vom Antriebsmotor abgeführt wird. Der Elektromotor überhitzt und kann Schaden nehmen. Ein Beispiel für einen solchen motortemperaturkritischen Betrieb ist eine Langsamfahrt oder Schleichfahrt eines Schienenfahrzeugs mit einem selbstbelüfteten Motor. Der Lüfter auf der Motorwelle führt bei geringen Drehzahlen systembedingt nur eine zu geringe Luftmenge am Motor vorbei, so dass es zu einer nicht ausreichenden Kühlung des Motors kommt. Gerade bei Schienenfahrzeugen kann ein Betrieb bei geringen Geschwindigkeiten zu einer relativ hohen Motorbelastung führen, beispielsweise bei einer Bergfahrt bei einem hohen Gewicht des Zuges oder einem Ausfallbetrieb, bei dem ein oder mehrere Antriebsmotoren ausgefallen sind und die Antriebslast auf die anderen Elektromotoren verteilt wird. Bei einem solchen motortemperaturkritischen Betrieb kann es zu einer Überlastung des Motors kommen.

Zur Abhilfe dieses Problems ist es bekannt, den Motor überdimensioniert auszulegen. Dies führt jedoch zu Mehrkosten. Aus der Offenlegungsschrift EP 0 930 692 A2 ist es bekannt, den Lüfter auf der Motorwelle von der Rotation der Motorwelle zu entkoppeln. Durch einen eigenen Lüfterantrieb kann auch bei geringer Geschwindigkeit für ausreichende Kühlung gesorgt werden. Aus der gleichen Schrift ist es außerdem bekannt, einen Lüfter mit besonders großen Schaufeln vorzusehen, der auch bei einer geringen Geschwindigkeit für eine ausreichende Kühlung sorgt. Bei einer hohen Motordrehzahl sorgt ein Entkopplungsglied für eine Verlangsamung der Lüfterdrehzahl.

Es ist insbesondere eine Aufgabe der Erfindung, ein Verfahren zum Betrieb eines Schienenfahrzeugs anzugeben, mit dem eine Überhitzung eines Antriebsmotors eines Schienenfahrzeugs auch bei einem motortemperaturkritischen Betrieb vermieden werden kann.

Diese Aufgabe wird durch ein Verfahren der eingangs genannten Art gelöst, bei dem erfindungsgemäß bei einem Erkennen des motortemperaturkritischen Betriebs ein Motor schonender Betriebsmodus des Traktionsumrichters eingeleitet wird, der eine Wärmeerzeugung im Elektromotor gegenüber einem regulären Betrieb verringert und das Motormoment erhält. Durch die geringere Wärmeerzeugung im Elektromotor verglichen zur regulären Betriebsweise kann eine Überhitzung des Motors und einem Schaden des Motors entgegengewirkt werden, ohne dass auf Motormoment verzichtet werden muss.

Dieses Verfahren ist besonders vorteilhaft anwendbar in einem Langsamfahrbetrieb des Schienenfahrzeugs, beispielsweise unterhalb von 20 km/h, insbesondere unterhalb von 15 km/h, insbesondere in Verbindung mit einem eigenbelüfteten Elektromotor, bei dem die Drehzahl des Motorlüfters an die Drehzahl der Motorwelle zwangsgekoppelt ist. Der Motorumrichter ist zweckmäßigerweise ein Pulswechselrichter und der Elektromotor ein Antriebsmotor des Schienenfahrzeugs.

Als ein motortemperaturkritischer Betrieb kann ein Betrieb verstanden werden, bei dem ein oder mehrere Parameter, z.B. eine Temperatur, einen vorbestimmten, insbesondere einen die Lebensdauer beeinflussenden Grenzwert übersteigen oder - je nach Parameter - darunter fallen. Ein Beispiel ist das Überschreiten einer vorbestimmten Motortemperatur, insbesondere eine in Bezug auf die Lebensdauer des Motors kritische Motortemperatur, beispielsweise oberhalb 150°C. Ein solcher Parameter kann auch eine Fahrweise sein, z.B. ein Fahren von mehr als 5 Minuten mit einer geringen Geschwindigkeit, beispielsweise unterhalb von 15 km/h. Auch die Zugkraft kann als Parameter verwendet werden, beispielsweise mehr als 30% der Maximalzugkraft bei der geringen Geschwindigkeit über einen Zeitraum, der einen vorbestimmten Zeitraum überschreitet. Auch eine Kopplung der erwähnten Parameter ist möglich.

Ebenfalls kann ein Ort des Schienenfahrzeugs als Parameter verwendet werden, z.B. wenn das Schienenfahrzeug am Fuß eines Berges steht und mit einer steilen Bergfahrt beginnt. Weiter ist als Parameter ein Betriebszustand von Aggregaten des Schienenfahrzeugs möglich. Ist z.B. ein Aggregat ausgefallen, z.B. eine Kühlungskomponente oder ein anderer Antriebsmotor, so kann dies bereits ohne weitere erschwerende Umstände als motortemperaturkritischer Betrieb gesehen werden.

Der motortemperaturkritische Betrieb kann beim Erkennen eintreten, bereits vorliegen oder als in Zukunft eintretend erkannt werden. So können beispielsweise kritische Bergstrecken als solche bekannt sein und eine Steuereinheit des Schienenfahrzeugs kann die Position des Schienenfahrzeugs, beispielsweise aus GPS-Daten, erfassen und erkennen, dass die kritische Bergfahrt bevorsteht. Bei einem Güterzug kann ein motortemperaturkritischer Betrieb schon bereits bei einer verhältnismäßig geringen, aber lang anhaltenden Steigung auftreten. Da der Steuereinheit auch die Masse des Zugs, beziehungsweise die Zugkraft von der Antriebslok auf die Wagen bekannt sein kann, ist auch hier ein motortemperaturkritischer Betrieb vorhersehbar.

Das Erkennen des motortemperaturkritischen Betriebs kann durch einen Sensor erfolgen, der z.B. den Parameter abtastet und ein Über- oder Unterschreiten eines Grenzwerts erfasst. Auch eine Steuereinheit ist möglich, die den Parameter überwacht, z.B. anhand eines oder mehrerer Sensoren oder einem Empfänger, der Parameterdaten von außerhalb, z.B. außerhalb des Schienenfahrzeugs, empfängt, wie GPS-Signale, wenn der Parameter ein Orts-Parameter ist, oder Gewichtsdaten, wenn einer stationären Einheit das Gewichts des Zugs bekannt ist. Die den motortemperaturkritischen Betrieb festlegenden Parameterdaten können in der Steuereinheit hinterlegt sein, so dass die Steuereinheit einen Zustand des Motors mit den hinterlegten Parameterdaten vergleichen kann.

Der reguläre Betrieb ist zweckmäßigerweise ein regulärer Betrieb des Traktionsumrichters. Er kann derjenige Betrieb - insbesondere des Traktionsumrichters - sein, in dem das Schienenfahrzeug ohne ein Erkennen oder Vorliegen eines motortemperaturkritischen Betriebs oder beim Erkennen des motortemperaturkritischen Betriebs betrieben wird. Der reguläre Betrieb und der motortemperaturkritischen Betrieb können sich auf verschiedene Aggregate beziehen, beispielsweise der motortemperaturkritische Betrieb auf den Elektromotor und der reguläre Betrieb auf den Traktionsumrichter. Es ist jedoch auch möglich, dass sich die beiden Betriebe auf das gleiche Aggregat beziehen, beispielsweise auf den Elektromotor. Beide Betriebe können zeitgleich bestehen, so dass der reguläre Betrieb ein motortemperaturkritischer Betrieb sein kann.

Das erfindungsgemäße Verfahren ist generell bei einem heißen beziehungsweise überhitzten Elektromotor einsetzbar, insbesondere bei einem Defekt der Motorkühlung und vor allem bei einer Langsamfahrt, insbesondere wenn der Elektromotor ein selbstkühlender Motor ist, dessen Kühlleistung also von der Motordrehzahl abhängig ist. Besonders vorteilhaft ist das Verfahren anwendbar, wenn der motortemperaturkritische Betrieb ein Langsamfahrbetrieb ist.

Das Motormoment kann das Motordrehmoment sein, z.B. das aktuell anliegende Drehmoment, bzw. eine momentane Leistung des Motors, insbesondere eine momentane Ausgangsleistung. Als ein das Motormoment erhaltender Betrieb kann ein Betrieb verstanden werden, bei dem stets das angeforderte Motormoment vom Elektromotor zur Verfügung gestellt wird oder es wird das gleiche Motormoment wie in einem regulären Betrieb zur Verfügung gestellt.

Das Einleiten dieses Motor schonenden Betriebsmodus kann sofort gesteuert bzw. durchgeführt werden oder zu einem vorbestimmten Zeitpunkt, der zweckmäßigerweise vom motortemperaturkritischen Betrieb abhängt. Ist beispielsweise absehbar, dass der Betrieb besonders kritisch sein wird, kann der Motor schonende Betrieb früher eingeleitet werden und/oder der Grad der Motorschonung, also des Wärmeeintrags beziehungsweise der Wärmeerzeugung im Motor, kann variiert werden.

In einer vorteilhaften Ausführungsform der Erfindung ist im Motor schonenden Betriebsmodus eine Taktfrequenz des Motorumrichters gegenüber einem regulären Betrieb verändert, insbesondere erhöht. Es wird also bei einem Erkennen des motortemperaturkritischen Betriebs eine den Wärmeeintrag in den Elektromotor verringernde und das Motormoment erhaltende Taktfrequenz des Traktionsumrichters eingeleitet.

Im regulären Betrieb ist es normalerweise bei einer Langsamfahrt sinnvoll, den Motorumrichter mit einer langsamen Taktfrequenz zu betreiben, um die Schaltungsverluste gering zu halten. Demgegenüber wird bei einer besonders vorteilhaften Ausgestaltung der Erfindung vorgeschlagen, dass die Taktfrequenz bei Vorliegen des motortemperaturkritischen Betriebs gegenüber einem regulären Betrieb erhöht wird. Entsprechend wird der Elektromotor mit einer höheren Taktfrequenz des Motorumrichters betrieben. Hierdurch können die Oberschwingungsverluste in den Motorblechen verringert werden und damit auch die Wärmeentwicklung im Motor. Durch die schnellere Taktfrequenz wird die thermische Belastung vom Motor auf den Motorumrichter verschoben.

Die Quantität der Erhöhung der Taktung gegenüber dem regulären Betrieb kann von Daten des motortemperaturkritischen Betriebs abhängig gemacht werden. So kann die Taktung bei einem nur kurzzeitigen motortemperaturkritischen Betrieb höher gewählt werden als bei einem länger anhaltenden solchen Betrieb. Die Quantität der Erhöhung der Taktung, insbesondere eine besonders schnelle Taktung, kann auch von den Umständen des Motors abhängig gemacht werden. Liegt beispielsweise eine kritische Überlastung des Motors vor, so kann eine besonders schnelle Taktfrequenz in Erwägung gezogen werden. Die Taktfrequenz kann auch von Umgebungsparametern abhängig gemacht werden. Solche Umgebungsparameter können die Höhe der Netzspannung sein, die in Bahnnetzen schwanken kann, und/oder die Außentemperatur am Schienenfahrzeug. Eine Erhöhung um 20%, insbesondere um 50%, und auch eine Verdopplung der Taktfrequenz ist - je nach Umgebungsparametern und Motortemperatur - sinnvoll.

Als eine vorteilhafte Erhöhung der Taktfrequenz wird vorgeschlagen, dass die Taktfrequenz in Abhängigkeit von einer Temperatur des Elektromotors in zumindest mehreren Stufen erhöht wird, insbesondere kontinuierlich mit kontinuierlich steigender Motortemperatur. Mit wachsender Motorbelastung kann somit die thermische Belastung gleichmäßig vom Motor auf den Umrichter verschoben werden, sodass eine möglichst gleichmäßige Belastung der beiden Komponenten erreicht wird.

Um sowohl eine thermische Überlastung des Elektromotors als auch des Motorumrichters zu vermeiden, ist es vorteilhaft, wenn die Taktfrequenz in Abhängigkeit von einer Temperatur des Elektromotors und in Abhängigkeit von einer Temperatur des Motorumrichters erhöht wird. Je nach thermischer Belastungssituation von Elektromotor und Umrichter kann die thermische Belastung mehr auf den Umrichter - bei höherer Taktfrequenz als regulär - oder bei niedrigerer Taktfrequenz mehr auf den Motor verlagert werden.

Die erwähnten verschiedenen temperaturkritischen Betriebsweisen des Elektromotors sind in der Regel kurzzeitig, sodass es sinnvoll sein kann, den Umrichter zur Schonung des Elektromotors kurzzeitig zu hoch zu belasten. Entsprechend wird vorgeschlagen, dass die erhöhte Taktfrequenz aufrecht gehalten wird, auch wenn die Temperatur des Motorumrichters über eine Temperaturobergrenze des regulären Betriebs steigt. Bei einer kurzzeitigen höheren Belastung des Motorumrichters als regulär sind Lebensdauerprobleme, beziehungsweise Verschleiß des Umrichters ggf. noch gering, sodass die Belastungsnachteile des Umrichters geringer sein können als die Überschreitung der thermischen Grenze des Elektromotors.

Um eine Schädigung sowohl des Motorumrichters als auch des Elektromotors zuverlässig zu vermeiden, ist es vorteilhaft, wenn die Belastung des Elektromotors, insbesondere die aktuelle Belastung des Elektromotors und insbesondere auch des Umrichters überwacht wird, beispielsweise von einer Steuereinheit des Schienenfahrzeugs. Um einen Defekt zu vermeiden, wird daher vorgeschlagen, dass die Taktung in Abhängigkeit von einer Belastungsfunktion von Elektromotor und/oder Motorumrichter als Funktion über die Zeit variiert wird, wobei die Belastungsfunktion den Temperaturverlauf von Elektromotor und/oder Motorumrichter über die Zeit berücksichtigt. Neben dem Temperaturverlauf, beziehungsweise der Temperaturverläufe, können noch weitere Parameter als unabhängige Variable der Belastungsfunktion verwendet werden.

In einer weiteren vorteilhaften Ausführungsform der Erfindung beinhaltet der Motor schonende Betriebsmodus eine Veränderung der Zwischenkreisspannung unter einen Spannungswert, der im regulären Betrieb eingestellt wird. Bei einem Erkennen des motortemperaturkritischen Betriebs wird als eine einen Wärmeeintrag in den Elektromotor verringernde und das Motormoment erhaltende Veränderung, insbesondere Absenkung, der Zwischenkreisspannung durch den Traktionsumrichter eingeleitet. Dies kann durch den Eingangs-Stromrichter des Traktionsumrichters geschehen.

Vorteilhafterweise wird die Zwischenkreisspannung bei Vorliegen des motortemperaturkritischen Betriebs gegenüber der regulären Spannung des Zwischenkreises abgesenkt. Hierdurch wird der Wärmeeintrag in den Motor, beziehungsweise die Wärmeerzeugung im Motor, verringert. Während bei langsamer Fahrt die Motorspannung beispielsweise nur 150 V beträgt, liegt die Zwischenkreisspannung beispielsweise bei 1,8 kV. Eine Absenkung der Zwischenkreisspannung um zumindest 10%, insbesondere zumindest 20%, ist möglich. Die Absenkung kann getaktet, also in der regulären Betriebsweise des Eingangs-Stromrichters, erfolgen, oder im Maximalfall im Diodenbetrieb. Dabei können auch die Verluste im Motorumrichter sinken, der damit eine höhere Taktfrequenz zulässt.

Weiter wird vorgeschlagen, dass die Absenkung der Zwischenkreisspannung in Abhängigkeit von der am Traktionsumrichter anliegenden Netzspannung erfolgt. Die Netzspannung, also die Betriebsspannung des Bahnnetzes, die an der Oberleitung anliegt, kann erheblich schwanken. Die Schwankung ist beispielsweise abhängig von der Entfernung des Schienenfahrzeuges zur nächsten Spannungseinspeisung in das Bahnnetz und der im Umkreis des Schienenfahrzeugs aus dem Bahnnetz abgezogenen Leistung des Schienenfahrzeugs oder anderer Schienenfahrzeuge. Je niedriger die Netzspannung ist, umso größer kann die Absenkung der Zwischenkreisspannung sein.

Bei Vorliegen eines motorkritischen Betriebs ist es sinnvoll, sowohl die Taktfrequenz des Motorumrichters zu erhöhen als auch die Zwischenkreisspannung abzusenken. Vorteilhafterweise wird zunächst die Taktfrequenz erhöht und danach die Zwischenkreisspannung abgesenkt. Eine zusätzliche Absenkung der Zwischenkreisspannung kann abhängig gemacht werden von einem Parameter des temperaturkritischen Betriebs, beispielsweise der Motortemperatur und/oder einen Verlauf der Motortemperatur. Um den Motorumrichter zu schonen, kann es hingegen sinnvoll sein, zunächst die Zwischenkreisspannung abzusenken, insbesondere die Netzspannung besonders niedrig ist und die Zwischenkreisspannung stark abgesenkt werden kann.

Dauert die Schleichfahrt lange oder ist die Temperatur des Motors sehr hoch, ist es vorteilhaft, wenn die Taktfrequenz des Motorumrichters gegenüber einem regulären Betrieb erhöht wird und die Zwischenkreisspannung gegenüber ihrer regulären Spannung abgesenkt wird, bevor die Temperatur des Motorumrichters eine reguläre Temperaturobergrenze erreicht. So wird zunächst versucht, die Temperatur des Motorumrichters im regulären Band zu halten, um eine Überhitzung des Motorumrichters zu vermeiden.

Selbstverständlich ist es genauso sinnvoll, die Zwischenkreisspannung abzusenken, wenn die Temperatur des Motorumrichters ihre reguläre Temperaturobergrenze erreicht. Dieses Verfahren hat den Vorteil, dass die Temperaturbelastung vom Motor zunächst sehr effektiv auf den Umrichter verlagert wird, ohne dass eine Absenkung der Zwischenkreisspannung andere Aggregate des Schienenfahrzeugs beeinflusst. Erst wenn die Temperatur des Motorumrichters eine Temperaturgrenze erreicht hat, beispielsweise die reguläre Temperaturobergrenze, oder eine andere vorher festgelegte Temperaturobergrenze, wird die Zwischenkreisspannung als zusätzliche Maßnahme abgesenkt, um den Elektromotor weiter zu entlasten, ohne jedoch den Umrichter weiter zu belasten. Eine weitere Belastung des Umrichters kann so auf solche Fälle beschränkt bleiben, in denen die Entlastung durch die Zwischenkreisspannungsabsenkung ausgereizt ist.

Eine weitere vorteilhafte Ausführungsform der Erfindung sieht vor, dass das Erkennen des motortemperaturkritischen Betriebs und das Einstellen des Motor schonenden Betriebsmodus des Traktionsumrichters vor einem Eintreten des motortemperaturkritischen Betriebs erfolgt. Ist beispielsweise absehbar, dass ein motortemperaturkritischer Betrieb eintreten wird, beispielsweise durch eine vorhersehbare lange Langsamfahrt oder eine vorhersehbare Bergfahrt, insbesondere bei hoher Zugkraft, kann das Wechseln des Betriebsmodus des Traktionsumrichters als präventive Maßnahme zur Schonung des Motors gefahren werden.

So wird präventiv beispielsweise die Taktfrequenz des Motorumrichters erhöht, insbesondere bis eine Temperaturobergrenze des Motorumrichters erreicht ist. Nicht nur im präventiven Fall sondern generell kann die Taktung so gesteuert werden, dass die Temperatur des Motorumrichters unterhalb eines festgelegten Grenzwerts, beispielsweise der Temperaturobergrenze für den regulären Betrieb, verbleibt, wobei auch ein Temperaturband um oder an diesem Grenzwert möglich und vorteilhaft ist.

Zweckmäßigerweise wird die Zeitspanne zwischen dem Beginn des Motor schonenden Betriebsmodus und dem voraussichtlichen Beginn des motortemperaturkritischen Betriebs von einem Belastungsparameter des motortemperaturkritischen Betriebs abhängig gemacht. Der motortemperaturkritische Betrieb, also derjenige Betrieb, der ohne das Wechseln zum Motor schonenden Betrieb eintreten würde, oder der trotz des Motor schonenden Betriebs voraussichtlich eintreten wird, kann unterschiedlich gravierend sein, je nach voraussichtlicher Belastung, insbesondere Temperaturbelastung, des Elektromotors. Je größer die voraussichtliche Belastung sein wird, desto größer ist z.B. der Belastungsparameter.

Entsprechend ist es sinnvoll, den Zeitpunkt in Abhängigkeit von einem Belastungsparameter des motortemperaturkritischen Betriebs zu wählen, beispielsweise den Motor schonenden Betrieb früher zu starten, wenn eine besonders temperaturkritische Strecke erwartet wird. Selbstverständlich ist es möglich und sinnvoll mehrere Parameter, z.B. physische Parameter, zu einem Belastungsparameter zu verarbeiten. Solche Parameter oder der Belastungsparameter an sich können sein: eine aktuelle oder voraussichtliche zukünftige Motortemperatur, ein zeitliches Integral über die Motortemperatur - gegebenenfalls mit einer Gewichtungsfunktion, um z.B. hohe Temperaturen höher zu gewichten, die Außentemperatur um das Schienenfahrzeug, eine Steigung und Länge einer zu befahrenden Strecke, die voraussichtliche Zugkraft im Verlauf der Strecke, die momentane Netzspannung, die voraussichtliche Netzspannung im Verlauf der zu durchfahrenden Strecke und/oder die aktuelle oder zukünftige Temperatur des Motorumrichters auf der zu durchfahrenden Strecke.

Weiter ist es vorteilhaft, wenn die Temperatureffektivität des Motor schonenden Betriebs abgeschätzt und der Zeitpunkt des Beginns des Motor schonenden Betriebs in Abhängigkeit von der Temperatureffektivität gesetzt wird. Ist bereits absehbar, dass beispielsweise durch eine sehr hohe Umgebungstemperatur eine kurzfristige Takterhöhung des Motorumrichters nicht ausreichen wird, ist es sinnvoll, bereits frühzeitig die Temperaturlast vom Motor auf den Umrichter zu verlagern, um den Motor frühzeitig zu kühlen beziehungsweise zu entlasten, sodass die Temperaturlast für einen möglichst langen Zeitraum gleichmäßig auf die beiden Aggregate verteilt wird.

Eine weiter vorteilhafte Ausführungsform der Erfindung sieht vor, dass nach dem Erkennen und vor dem Eintreten des motortemperaturkritischen Betriebs ein elektrisches Bremsen gegenüber einem regulären Betrieb eingeschränkt wird, insbesondere darauf verzichtet wird. Auch das geschieht üblicherweise durch eine veränderte Taktfrequenz beziehungsweise einen veränderten Betriebsmodus des Motorumrichters. Hierdurch kann ein Wärmeeintrag durch das Bremsen des Schienenfahrzeugs verringert beziehungsweise vermieden werden. Anstelle der elektrischen Bremse kann pneumatisch gebremst werden. Es ist auch möglich, einen Verzicht auf eine elektrische Bremsung, abhängig von der momentanen Temperatur des Motors, zu machen.

Weiter ist es vorteilhaft, dass nach dem Erkennen und vor dem Eintreten des motortemperaturkritischen Betriebs eine Motorkühlung durchgeführt wird. Diese Motorkühlung kann eine Sonderkühlung sein oder eine Abkühlung durch ein längeres Stehen. Hierdurch kann die Anfangstemperatur des Motors bereits vor Beginn eines motortemperaturkritischen Betriebs, beispielsweise Langsamfahrbetrieb, gering gehalten werden.

Zur präventiven Motorkühlung kann beispielsweise ein außerregulärer Lüfterbetrieb gefahren werden, um möglichst viel Wärme vom Motor auszutragen. Oder es wird ein außerregulärer Kühlmodus des Motors aktiviert, beispielsweise wird eine Flüssigkeits- oder Ölkühlung oder eine Stoßkühlung mit Druckluft initiiert. Eine solche Vorabkühlung erfolgt zweckmäßigerweise temperaturgesteuert, wobei die Motortemperatur hierbei zweckmäßigerweise vor Beginn des motortemperaturkritischen Betriebs unterhalb einer vorgegebenen Temperatur liegt.

Ebenfalls möglich, jedoch mit einem relativ hohen Aufwand verbunden, ist eine spezielle Abkühlphase. Das Schienenfahrzeug kann gestoppt werden, insbesondere vor Eintreten des motortemperaturkritischen Betriebs, um den Motor abkühlen zu lassen. Gegebenenfalls liegt vor einer temperaturkritischen Betriebsphase ein Haltepunkt. Wenn möglich wird der Zug dort länger gestoppt, um eine besonders weitgehende Abkühlung des Motors zu erreichen. Eine solche Abkühlphase kann auch im Fahrplan verankert werden.

Die Erfindung ist außerdem gerichtet auf eine Steuereinrichtung zum Steuern eines Betriebs eines Schienenfahrzeugs, das einen Elektromotor, einen Traktionsumrichter mit einem Eingangs-Stromrichter zum Erzeugen einer Zwischenkreisgleichspannung und einem Motorumrichter umfasst, die eine Steuereinheit aufweist, die dazu vorbereitet ist, einen motortemperaturkritischen Betrieb anhand zumindest eines vorbestimmten Parameters als solchen zu erkennen.

Es wird vorgeschlagen, dass die Steuereinheit erfindungsgemäß dazu vorbereitet ist, bei Erkennen des motortemperaturkritischen Betriebs einen Wärmeeintrag in den Elektromotor verringernden und das Motormoment erhaltenden Betriebsmodus des Traktionsumrichters einzuleiten. Es kann eine Wärmebelastung des Motors verringert, insbesondere auf andere Aggregate des Schienenfahrzeugs verlagert werden, sodass eine Überhitzung und ein Defekt des Elektromotors vermieden wird.

Vorteilhafterweise ist die Steuereinheit dazu vorbereitet, die erfindungsgemäßen, weitere oder alle der oben beschriebenen Verfahrensmerkmale zu steuern. Eine solche Vorbereitung kann durch ein entsprechendes Steuerprogramm der Steuereinheit vorliegen, dessen Ablauf - beispielsweise in Verbindung mit geeigneten Eingangssignalen, wie Sensorsignalen - eine solche Steuerung bewirkt. Hierzu umfasst die Steuereinheit zweckmäßigerweise elektronische Elemente, wie einen Prozessor und einen Datenspeicher, die zum Ablaufen des Steuerprogramms notwendig sind.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Die Ausführungsbeispiele sind außerdem derart, dass dazu geeignete Merkmale eines jeden Ausführungsbeispiels explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden können.

Es zeigen:
- FIG 1: eine schematische Darstellung eines Schienenfahrzeuges mit Elektromotoren und einem Traktionsumrichter,
- FIG 2: ein dreiteiliges Diagramm, zeigend die Geschwindigkeit des Schienenfahrzeugs, eine Motortemperatur und Parameter des Umrichters über die Zeit,
- FIG 3: ein Diagramm analog zu FIG 2 bei einer etwas veränderten Umrichtersteuerung und
- FIG 4: ein Diagramm analog zu FIG 2 mit einer präventiven Umrichtersteuerung.

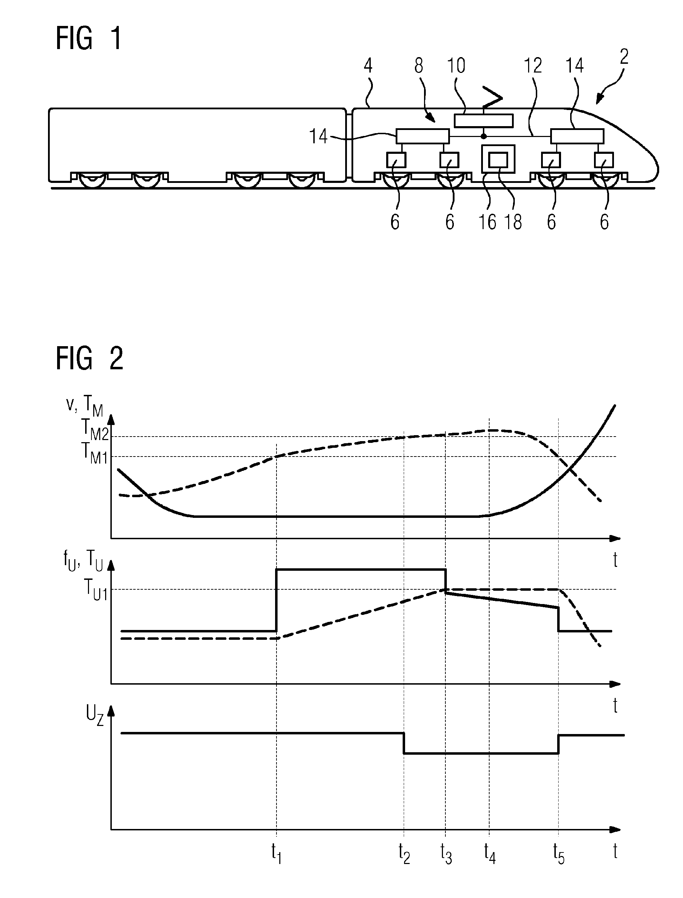

FIG 1 zeigt eine schematische Darstellung eines Schienenfahrzeugs 2, das einen Triebwagen 4 mit vier angetriebenen Achsen aufweist. Jede Achse wird von einem Elektromotor 6 angetrieben, der von einem Traktionsumrichter 8 gespeist wird. Der Traktionsumrichter 8 umfasst einen Eingangs-Stromrichter 10, der aus der Netzspannung einer Oberleitung - gegebenenfalls über mehrere Stufen - eine Zwischenkreisgleichspannung in einen Zwischenkreis 12 erzeugt.

Mit dem Zwischenkreis 12 elektrisch verbunden sind zwei Motorumrichter 14, die im vorliegenden Ausführungsbeispiel als Pulswechselrichter ausgeführt sind, wobei jedoch auch andere Formen von Motorumrichtern denkbar sind. Die beiden Motorumrichter 14 wandeln die Zwischenkreisgleichspannung in Dreiphasen-Wechselspannung für die Elektromotoren 6, wobei jeder der beiden Motorumrichter 14 jeweils zwei Elektromotoren 6 versorgt. Es ist auch möglich, dass ein Motorumrichter 14 nur einen oder mehr als zwei Elektromotoren 6 versorgt. Die Versorgung der Elektromotoren 6 mit Betriebsspannung wird von einer Steuereinrichtung 16 gesteuert, die den Betrieb des Traktionsumrichters 8 und der Elektromotoren 6 steuert. Es ist auch möglich, dass die Steuereinrichtung 16 auch weiter Aggregate des Schienenfahrzeugs 2 steuert, beispielsweise Instrument des Fahrerstands des Schienenfahrzeugs 2, Bremsen, Klimaaggregate und dergleichen mehr. Die Steuereinrichtung 16 weist eine Steuereinheit 18 auf, die die Elektromotoren 6 und den Traktionsumrichter 8 überwacht und diese beiden Einheiten steuert.

FIG 2 zeigt einige Betriebsparameter des Schienenfahrzeugs 2 in einem Diagramm über die Zeit t. Die Parameter sind weder maßstäblich noch quantitativ sondern nur qualitativ zu verstehen. Der oberste Teil des Diagramms zeigt die Geschwindigkeit v des Schienenfahrzeugs 2 in einer durchgezogenen Linie. Die gestrichelte Linie zeigt die Motortemperatur T_{M} von einem oder mehreren der Elektromotoren 6. Der mittlere Teil des Diagramms zeigt einen Taktmodus f_{U} der Motorumrichter 14 in einer durchgezogenen Linie und die Temperatur T_{U} eines oder beider Motorumrichter 14 in einer gestrichelten Linie. Der Taktmodus f_{U} zeigt eine Taktfrequenz bzw. Pulsfrequenz der Motorumrichter 14 an. Ein linearer Zusammenhang zwischen Taktmodus f_{U} und Taktfrequenz bzw. Pulsfrequenz kann, muss aber nicht bestehen. Je größer der Taktmodus f_{U} ist, desto höher ist die Pulsfrequenz. In einem Taktmodus f_{U} muss jedoch die Pulsfrequenz nicht konstant sein, auch wenn der Taktmodus f_{U} gleich bleibt. Umgekehrt kann die Taktung unstetig steigen oder fallen, z.B. in Frequenzsprüngen, auch wenn der Taktmodus f_{U} in FIG 2 kontinuierlich steigt bzw. fällt. Der untere Teil des Diagramms zeigt die Zwischenkreisspannung U_{z} des Zwischenkreises 12 über die Zeit t.

Während des Betriebs des Schienenfahrzeugs kann es vorkommen, dass dieser in einen motortemperaturkritischen Betrieb über geht. In erster Linie kann dies ein solcher Betrieb sein, bei dem eine Motortemperatur über einem festgelegten Grenzwert T_{M1} liegt, oberhalb dessen der Motor zwar keinen direkten Schaden nehmen muss, ein solcher Betrieb jedoch seine Lebensdauer überdurchschnittlich senkt. Während einer solchen Betriebsphase ist es sinnvoll, den Traktionsumrichter 8 in einer Motor schonenden Betriebsweise zu betreiben, bei der eine Wärmeerzeugung im Elektromotor gegenüber einer Wärmeerzeugung in einem regulären Betrieb verringert wird.

Hierbei kann es vorkommen, dass es nicht sinnvoll ist, das Motormoment zu verringern, beispielsweise langsamer zu fahren und so den Motor abkühlen zu lassen. Ein Beispiel ist eine Bergfahrt bei geringer Geschwindigkeit und beispielsweise Volllast, bei der eine weiter Absenkung der Geschwindigkeit eine Motorkühlung unter Umständen so beeinträchtigen würde, dass dies die Motortemperatur noch weiter steigern würde.

FIG 2 zeigt ein solches Beispiel. Die Geschwindigkeit v des Schienenfahrzeugs 2 sinkt auf eine geringe Geschwindigkeit, beispielsweise 10 km/h ab. Durch die gering werdende Motorkühlung der beispielsweise selbstbelüfteten Motoren 6 steigt die Temperatur T_{M} an. Erreicht diese Temperatur T_{M} einen ersten vorbestimmten Grenzwert T_{M1} so beginnt ein motorkritischer Betrieb. Dieser Betrieb wird von der Steuereinheit 18 erkannt und es wird ein Motor schonender Betriebsmodus des Traktionsumrichters 8 eingeleitet.

Bei dem in FIG 2 gezeigten Ausführungsbeispiel geschieht dies, indem der Taktmodus f_{U} von einem unteren Modus auf einen höheren Modus mit einer höheren Frequenz angehoben wird, z.B. die Pulsfrequenz von einer ersten Frequenz auf eine höhere zweite Frequenz erhöht wird. Dies geschieht zum Zeitpunkt t₁, an dem die Motortemperatur T_{M} den ersten Grenzwert T_{M1} erreicht. Bedingt hierdurch nehmen die Verluste in den Blechen der Elektromotoren 6 ab, sodass in den Elektromotoren 6 weniger Wärme erzeugt wird.

Im oberen Teil des Diagramms ist sichtbar, dass ab dem Zeitpunkt t₁ die Temperatur in den Elektromotoren 6 weniger stark ansteigt. Allerdings nehmen die Wärmeverluste in den Motorumrichtern 14 zu, sodass deren Temperatur T_{U} ab dem Umschaltzeitpunkt t₁ ansteigt, wie im mittleren Teil des Diagramms aus FIG 2 zu sehen ist. Die Wärmeentwicklung beziehungsweise Wärmeentlastung wird von den Elektromotoren 6 auf die Motorumrichter 14 verschoben. Im gezeigten Ausführungsbeispiel reicht diese Maßnahme nicht aus, um ein Ansteigen der Motortemperatur T_{M} zu stoppen.

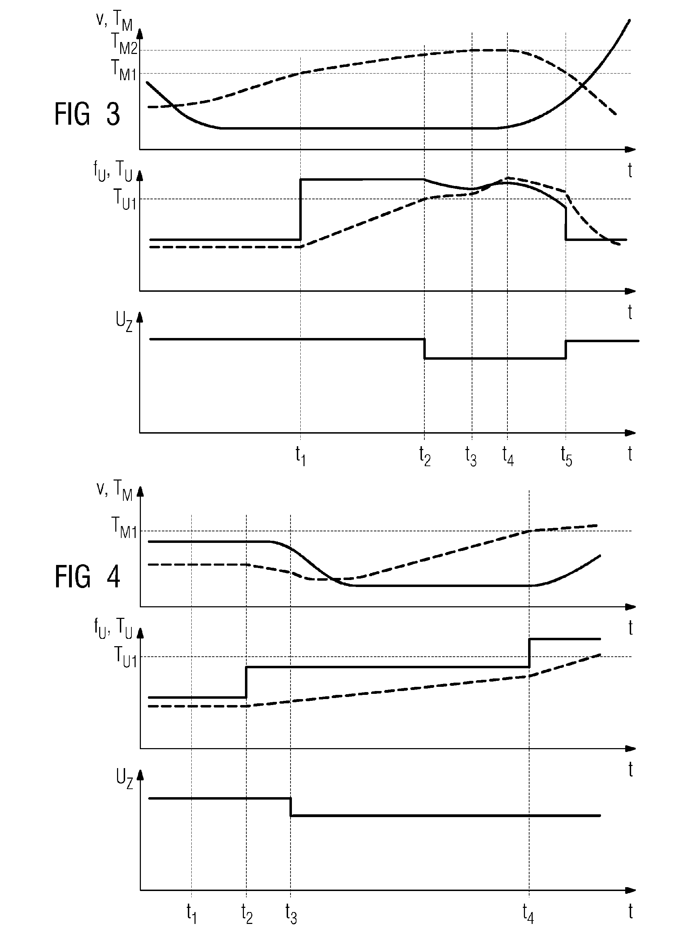

Erreicht dieser einen zweiten Grenzwert T_{M2}, so wird in einer weiteren Maßnahme ein weitergehend Motor schonender Betrieb des Traktionsumrichters 8 von der Steuereinheit 18 gesteuert: Die Zwischenkreisspannung U_{z} wird zum Zeitpunkt t₂ verringert, wie im unteren Teil des Diagramms aus FIG 2 dargestellt ist. Hierdurch wird die Wärmeentwicklung in den Elektromotoren 6 gegenüber einem regulären Betrieb noch weiter herabgesetzt. Die Absenkung der Zwischenkreisspannung U_{z} geschieht in Abhängigkeit von der am Traktionsumrichter 8 anliegenden Bahnnetzspannung. Bei höherer Bahnnetzspannung erfolgt eine größere Absenkung als bei einer niedrigeren Bahnnetzspannung. Dauert die Langsamfahrt oder generell ein motortemperaturkritischer Betrieb zu lange, so kann es vorkommen, dass auch die Temperatur T_{U} der Motorumrichter 14 einen kritischen Grenzwert T_{U1} erreicht. Dies in FIG 2 zum Zeitpunkt t₃ gegeben. Die Temperaturgrenze T_{U1} ist die Temperaturobergrenze des regulären Betriebs der Motorumrichter 14. Es ist nun zu entscheiden, ob die Elektromotoren 6 oder die Motorumrichter 14 mehr geschont werden. FIG 2 zeigt ein Beispiel, bei dem die Temperaturstabilisierung der Motorumrichter 14 Vorrang hat und FIG 3 zeigt ein Beispiel, bei dem die Temperaturstabilisierung der Elektromotoren 6 Vorrang hat.

Bei dem in FIG 2 gezeigten Ausführungsbeispiel soll die Temperatur T_{U} der Motorumrichter 14 möglichst nicht über dem Grenzwert T_{U1} steigen. Entsprechend wird die Taktfrequenz f_{U} in Abhängigkeit von dem Zeitpunkt t₃, an dem die Umrichtertemperatur T_{U} den Grenzwert T_{U1} erreicht, abgesenkt. In FIG 2 ist dargestellt, dass die Taktfrequenz F_{U} bei Erreichen des Temperaturgrenzwertes T_{U1} abgesenkt wird. Die Taktfrequenz wird nun so gesteuert, dass die Temperatur T_{U} nicht über den Grenzwert T_{U1} steigt und insbesondere am Grenzwert T_{U1} verharrt, wie im mittleren Teil der FIG 2 dargestellt ist. Im gezeigten Ausführungsbeispiel wird die Taktfrequenz f_{U} abrupt abgesenkt und dann so geregelt, dass die Temperatur T_{U} konstant bleibt.

Durch die Absenkung der Umrichtertaktung f_{U} steigt die Motortemperatur T_{M} allerdings weiter leicht an, sodass der obere Grenzwert T_{M2} überschritten wird.

Ab dem Zeitpunkt t₄ beschleunigt das Schienenfahrzeug 2 wieder, beispielsweise weil es die Bergkuppe erreicht hat, und entsprechend steigt die Kühlleistung der Motorkühlung wieder an, sodass die Motortemperatur T_{M} wieder absinkt. Fällt die Motortemperatur T_{M} unter den unteren Grenzwert T_{M1}, so kann der Motor schonende Betriebsmodus, der im gezeigten Ausführungsbeispiel bei einer Motortemperatur T_{M} über dem Grenzwert T_{M1} gesteuert wurde, beendet werden. Die Taktfrequenz f_{U} der Motorumrichter 14 wird auf die reguläre Taktfrequenz abgesenkt und die Zwischenkreisspannung U_{z} wird auf den regulären Spannungswert wieder eingestellt. Das Schienenfahrzeug 2 setzt seinen Betrieb im regulären Betriebsmodus fort.

FIG 3 zeigt einen ähnlichen Betriebsfall wie FIG 2. Wie bei dem in FIG 2 gezeigten Ausführungsbeispiel sinkt die Fahrgeschwindigkeit v des Schienenfahrzeugs 2 ab, die Motortemperatur T_{M} steigt, der motortemperaturkritische Betrieb wird durch das Steigen der Motortemperatur T_{M} über den unteren Grenzwert T_{M1} erkannt, und der Motor schonende Betriebsmodus wird eingeleitet, indem die Taktfrequenz f_{U} gegenüber dem regulären Betrieb erhöht wird, wie in FIG 3 am Zeitpunkt t₁ dargestellt ist. Wie bei dem vorherigen Ausführungsbeispiel reicht auch hier die Taktungserhöhung nicht aus, um das Ansteigen der Motortemperatur T_{M} zu verhindern. Diese steigt also weiter an, wobei jedoch auch die Temperatur T_{U} des Motorumrichters 14 ansteigt und ihren Grenzwert T_{U1} erreicht.

Um die Elektromotoren 6 zu schonen, ist dieser Temperaturgrenzwert T_{U1} jedoch kein absoluter Grenzwert, der nicht überschritten werden soll, sondern nur ein Steuertrigger zur Einleitung weiterer Steuermaßnahmen. Bei dem in FIG 3 gezeigten Ausführungsbeispiel wird die Taktfrequenz der Motorumrichter 14 nun in Abhängigkeit sowohl der Motortemperatur T_{M} als auch der Umrichtertemperatur T_{U} gesteuert, insbesondere geregelt.

Die Steuerung kann unter Verwendung einer Belastungsfunktion von Elektromotor und/oder Motorumrichter erfolgen, die eine Funktion über die Zeit sein kann. Die Temperaturen können die unabhängigen Variablen sein. Die Belastungsfunktion kann aus den Ist-Temperaturen T_{M}, T_{U} der beiden Einheiten Soll-Temperaturen der beiden Einheiten berechnen und die Ist-Temperaturen T_{M}, T_{U} insbesondere entsprechend regeln unter Beachtung einer vorgegebenen und in der Funktion hinterlegten Belastungsverteilung auf die beiden Einheiten. Die Funktion kann so gestaltet sein, dass die Temperaturbelastung nach einem vorbestimmten Verteilungsschlüssel, insbesondere gleichmäßig, auf die Elektromotoren 6 und die Motorumrichter 14 verteilt wird, eine höhere Temperaturbelastung der Elektromotoren 6 also auch eine höhere Temperaturbelastung der Motorumrichter 14 zur Folge haben kann und umgekehrt. In dem mittleren Abschnitt der FIG 3 ist zwischen den Zeitpunkten T₂ und t₃ gezeigt, dass die Taktfrequenz f_{U} nach eben diesen Kriterien gewählt ist. Beide Temperaturen T_{M}, T_{U} steigen leicht an, sodass die Temperaturbelastung der entsprechenden Bauteile ausgewogen bleibt.

Eine solche Steuerung und insbesondere Regelung kann dann modifiziert oder beendet werden, wenn ein weiterer kritischer Parameter des motortemperaturkritischen Betriebs erreicht wird, in FIG 3 am Zeitpunkt t₃ gezeigt, zu dem die Motortemperatur T_{M} den oberen Temperaturgrenzwerts T_{M2} erreicht. Ab diesem Zeitpunkt t₃ wird eine Belastungsäquivalenz aufgehoben und darauf geachtet, dass eines der Bauteile - Elektromotor 6 oder Motorumrichter 14 - mehr geschont wird. Bei dem in FIG 3 gezeigten Ausführungsbeispiel werden die Elektromotoren 6 geschont, sodass deren Temperatur nicht über den oberen Grenzwert T_{M2} steigt. Entsprechend muss die Taktfrequenz f_{U} der Motorumrichter 14 angehoben werden, um die Temperaturbelastung von den Elektromotoren 6 auf die Motorumrichter 14 zu übertragen.

Nachdem das Schienenfahrzeug 2 ab dem Zeitpunkt t₄ seine Geschwindigkeit wieder erhöht hat und die Lüftungsleistung zunimmt und die Motorentemperatur T_{M} abnimmt, sodass die unter den unteren Grenzwert T_{M1} fällt, ist der motortemperaturkritische Betrieb beendet und der Motor schonende Betriebsmodus kann ebenfalls beendet werden. Die ist zum Zeitpunkt t₅ der Fall. Die Taktfrequenz f_{U} wird auf die reguläre Taktfrequenz eingestellt und die Zwischenkreisspannung U_{Z} wird auf ihren regulären Wert eingestellt.

FIG 4 zeigt ein weiteres Ausführungsbeispiel, bei dem der Motor schonende Betrieb präventiv gesteuert wird, also bevor der motortemperaturkritische Betrieb eintritt. Der motortemperaturkritische Betrieb wird hierbei durch zumindest einen Parameter erkannt und zwar als zukünftig eintretend. Zum Zeitpunkt t₁ wird durch Berechnungen der Steuereinheit 18 erkannt, dass sich in Zukunft mit hoher Wahrscheinlichkeit ein motortemperaturkritischer Betrieb einstellen wird. Beispielsweise ist der Standort des Schienenfahrzeugs 2 am Fuße eines steilen Berges bekannt und die Strecke ist ebenfalls bekannt und entsprechende Parameter sind in der Steuereinheit 18 hinterlegt, sodass bekannt ist, dass der Zug zum Zeitpunkt t₃ beispielsweise den Aufstieg erreichen wird und seine Geschwindigkeit sich so verlangsamen wird, dass die Motorkühlung in erheblichem Maße abfällt.

Wird diese Betriebsgefahr von der Steuereinheit 18 erkannt, beispielsweise wird ein entsprechendes Flag gesetzt, so berechnet die Steuereinheit 18 als nächsten Schritt eine voraussichtliche Temperatureffektivität und zumindest eine mögliche Maßnahme eines Motor schonenden Betriebsmodus. Eine solche Maßnahme kann die Anhebung der Taktfrequenz f_{U} und/oder die Absenkung der Zwischenkreisspannung U_{Z} sein. Hierzu wird beispielsweise die Außentemperatur gemessen und die Netzspannung erfasst und eine Temperatureffektivität wird berechnet.

Außerdem wird vorteilhafterweise durch die Steuereinheit 18 erfasst, wie belastend der motortemperaturkritische Betrieb sein wird, und es wird ein Belastungsparameter ausgerechnet, der einen Grad des motortemperaturkritischen Betriebs anzeigt, also beispielsweise ob der Betrieb nur leicht motortemperaturkritisch oder gravierend motortemperaturkritisch ist. Aus den Daten zur Temperatureffektivität und/oder dem Belastungsparameter ermittelt die Steuereinheit 18 eine Betriebsweise für einen präventiven Motor schonenden Betrieb, insbesondere für eine präventive Motorkühlung.

Bei dem in FIG 4 gezeigten Ausführungsbeispiel beinhaltet diese Strategie, dass zum Zeitpunkt t₂ die Taktfrequenz f_{U} auf einen höheren Taktungsmodus eingestellt wird. Dies geschieht, bevor der motortemperaturkritische Betrieb eintritt, dieser tritt bei dem in FIG 4 gezeigten Ausführungsbeispiel erst zum Zeitpunkt t₄ ein. Der Zeitpunkt t₂ des Beginns des Motor schonenden Betriebs wird in Abhängigkeit von der Temperatureffektivität des Motor schonenden Betriebsmodus gesetzt.

Zu dieser Strategie kann auch die Festlegung des Umfangs der Taktungserhöhung gehören, wobei die Taktfrequenz in mehreren Schritten, wie in FIG 4 gezeigt, oder auch kontinuierlich angehoben werden kann. Durch die Verschiebung der Energieverluste von den Elektromotoren 6 zu den Umrichtern 14 sinkt die Motortemperatur T_{M} zum Zeitpunkt t₂ ab und die Umrichtertemperatur T_{U} steigt ab diesem Zeitpunkt an. Wie aus dem unteren Teil des Diagramms aus FIG 4 zu sehen ist, wird auch die Umrichterspannung U_{Z} präventiv abgesenkt, also bevor der motortemperaturkritische Betrieb erreicht ist. Entsprechend fällt die Motortemperatur T_{M} zum Zeitpunkt t₃ weiter und stärker ab.

Fällt nun die Geschwindigkeit des Schienenfahrzeugs 2 stark ab, so steigt die Motortemperatur trotz der präventiven Maßnahmen an, sodass sie beispielsweise zum Zeitpunkt t₄ einen Grenzwert T_{M1} erreicht, der den motortemperaturkritischen Betrieb anzeigt. Abhängig von diesem Zeitpunkt, insbesondere zu diesem Zeitpunkt, können weitere Motor schonende Maßnahmen eingeleitet werden, die Temperatureffektivität des Motor schonenden Betriebs also erhöht werden. Bei dem in FIG 4 gezeigten Ausführungsbeispiel geschieht das durch eine weitere Taktungserhöhung der UmrichterTaktfrequenz f_{U}. Der weitere Verlauf des Motor schonenden Betriebs kann entsprechend den Ausführungsbeispielen aus FIG 2 oder FIG 3 erfolgen.

Die präventive Motorkühlung kann auf alternative oder zusätzliche Maßnahmen gestützt werden. Beispielsweise wird der Motor durch einen speziellen Lüfterbetrieb vor Beginn der kritischen Betriebssituation gekühlt und/oder es wird ein spezieller Kühlmodus des Motors aktiviert, beispielsweise wird eine Flüssigkeit und/oder Ölkühlung und/oder eine Stoßkühlung mit Druckluft eingeleitet. Eine solche Vorabkühlung beziehungsweise präventive Kühlung erfolgt zweckmäßigerweise temperaturgesteuert, sodass der Elektromotor 6 vor Beginn der temperaturkritischen Betriebsphase unterhalb einer vorgegebenen Temperatur liegt. Weiter ist es möglich und sinnvoll, zusätzlich oder alternativ eine Abkühlphase vor Beginn des motortemperaturkritischen Betriebs zu legen. Gegebenenfalls liegt vor einer motortemperaturkritischen Betriebsphase ein Haltepunkt.

Weiter ist es möglich, nach dem Erkennen und vor dem Eintreten des motortemperaturkritischen Betriebs ein elektrischen Bremsen gegenüber einem regulären Betrieb einzuschränken, insbesondere auf ein elektrisches Bremsen ganz zu verzichten, zweckmäßigerweise so lange, bis der motortemperaturkritische Betrieb beendet ist oder die Gefahr eines solchen Betriebs nicht mehr vorliegt.

Es ist möglich, die oben beschriebenen Maßnahmen des Motor schonenden Betriebs einzeln oder in beliebiger Kombination miteinander zu betreiben. Durch eine oder mehrere dieser Maßnahmen kann verhindert werden, dass die Motortemperatur in einem motortemperaturkritischen Betrieb soweit steigt, dass der Elektromotor beschädigt wird. Der Betrieb des Schienenfahrzeugs 2 kann sicherer und zuverlässigerer gewährleistet werden und die Elektromotoren 6 können geschont werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betrieb eines Schienenfahrzeugs (2), das mindestens einen Elektromotor (6) und mindestens einen Traktionsumrichter (8) aufweist, der einen Eingangs-Stromrichter (10) zum Erzeugen einer Zwischenkreisgleichspannung und einen Motorumrichter (14) umfasst, bei dem ein motortemperaturkritischer Betrieb anhand zumindest eines vorbestimmten Parameters als solcher erkannt wird,
**dadurch gekennzeichnet, dass** bei einem Erkennen des motortemperaturkritischen Betriebs ein Motor schonender Betriebsmodus des Traktionsumrichters (8) eingeleitet wird, der eine Wärmeerzeugung im Elektromotor (6) gegenüber einem regulären Betrieb verringert und das Motormoment erhält.

2. Verfahren nach Anspruch 1,
**dadurch gekennzeichnet, dass** im Motor schonenden Betriebsmodus eine Taktfrequenz des Motorumrichters (14) gegenüber einem regulären Betrieb verändert ist.

3. Verfahren nach Anspruch 2,
**dadurch gekennzeichnet, dass** die Taktfrequenz in Abhängigkeit von einer Temperatur des Elektromotors (6) in zumindest mehreren Stufen erhöht wird.

4. Verfahren nach Anspruch 2 oder 3,
**dadurch gekennzeichnet, dass** die Taktfrequenz in Abhängigkeit von einer Temperatur des Elektromotors (6) und in Abhängigkeit von einer Temperatur des Motorumrichters (14) erhöht wird.

5. Verfahren nach einem der Ansprüche 2 bis 4,
**dadurch gekennzeichnet, dass** die erhöhte Taktfrequenz aufrecht gehalten wird, auch wenn die Temperatur des Motorumrichters (14) über eine Temperaturobergrenze des regulären Betriebs steigt.

6. Verfahren nach einem der Ansprüche 2 bis 5,
**dadurch gekennzeichnet, dass** die Taktfrequenz in Abhängigkeit von einer Belastungsfunktion von Elektromotor (6) und/oder Motorumrichter (14) als Funktion über die Zeit variiert wird, die den Temperaturverlauf von Elektromotor (6) und/oder Motorumrichter (14) über die Zeit berücksichtigt.

7. Verfahren nach einem der vorhergehenden Ansprüche, **dadurch gekennzeichnet, dass** der Motor schonende Betriebsmodus eine Absenkung der Zwischenkreisspannung gegenüber der regulären Spannung des Zwischenkreises (12) umfasst.

8. Verfahren nach Anspruch 7,
**dadurch gekennzeichnet, dass** die Absenkung in Abhängigkeit von der am Traktionsumrichter (8) anliegenden Bahnnetzspannung erfolgt.

9. Verfahren nach einem der vorhergehenden Ansprüche, **dadurch gekennzeichnet, dass** im Motor schonenden Betriebsmodus erst die Taktfrequenz des Motorumrichters (14) gegenüber einem regulären Betrieb erhöht wird und die Zwischenkreisspannung danach und spätestens dann gegenüber ihrer regulären Spannung abgesenkt wird, wenn die Temperatur des Motorumrichters (14) eine reguläre Temperaturobergrenze (T_{U1}) erreicht.

10. Verfahren nach einem der vorhergehenden Ansprüche, **dadurch gekennzeichnet, dass** das Erkennen des motortemperaturkritischen Betriebs und das Einstellen des Motor schonenden Betriebsmodus des Traktionsumrichters (8) vor Eintreten des motortemperaturkritischen Betriebs erfolgt.

11. Verfahren nach Anspruch 10,
**dadurch gekennzeichnet, dass** die Zeitspanne zwischen dem Beginn des Motor schonenden Betriebsmodus und dem voraussichtlichen Beginn des motortemperaturkritischen Betriebs von einem Parameter des motortemperaturkritischen Betriebs abhängig gemacht wird.

12. Verfahren nach Anspruch 10 oder 11,
**dadurch gekennzeichnet, dass** die Temperatureffektivität des Motor schonenden Betriebsmodus abgeschätzt und der Zeitpunkt des Beginns des Motor schonenden Betriebs in Abhängigkeit von der Temperatureffektivität gesetzt wird.

13. Verfahren nach einem der vorhergehenden Ansprüche, **dadurch gekennzeichnet, dass** nach dem Erkennen und vor dem Eintreten des motortemperaturkritischen Betriebs ein elektrisches Bremsen gegenüber einem regulären Betrieb eingeschränkt wird.

14. Verfahren nach einem der vorhergehenden Ansprüche, **dadurch gekennzeichnet, dass** nach dem Erkennen und vor dem Eintreten des motortemperaturkritischen Betriebs eine Motorkühlung durchgeführt wird.

15. Steuervorrichtung (16) zum Steuern eines Betriebs eines Schienenfahrzeugs (2), das einen Elektromotor (6), einen Traktionsumrichter (8) mit einem Eingangs-Stromrichter (10) zum Erzeugen einer Zwischenkreisgleichspannung und einem Motorumrichter (14) umfasst, die eine Steuereinheit (18) aufweist, die dazu vorbereitet ist, einen motortemperaturkritischer Betrieb anhand zumindest eines vorbestimmten Parameters als solchen zu erkennen,
**dadurch gekennzeichnet, dass** die Steuereinheit (18) dazu vorbereitet ist, bei Erkennen des motortemperaturkritischen Betriebs einen Wärmeeintrag in den Elektromotor (6) verringernden und das Motormoment erhaltenden Motor schonenden Betriebsmodus des Traktionsumrichters (8) einzuleiten.
